# EUROPEAN PATENT SPECIFICATION

(11) **EP 4 114 990 B1**
(45) Date of publication and mention of the grant of the patent: **18.06.2025**
(21) Application number: 21713747.0
(22) Date of filing: 04.03.2021
(51) Int. Cl.: G01B 11/28, C14B 1/28

(54) **MACHINE FOR MEASURING THE SURFACE OF HIDES**
MASCHINE ZUM MESSEN DER OBERFLÄCHE VON HÄUTEN
MACHINE DE MESURE DE LA SURFACE DE PEAUX

(30) Priority: 04.03.2020 IT 202000004615
(43) Date of publication of application: 11.01.2023
(73) Proprietor: Ger Elettronica S.r.l., 36075 Montecchio Maggiore (VI) (IT)
(72) Inventor: BURATO, Bruno, 36075 Montecchio Maggiore (VI) (IT)
(74) Representative: Piovesana, Paolo
(86) International application number: PCT/IB2021/051808
(87) International publication number: WO 2021/176390

(56) References cited:
- EP-A1- 2 272 320
- DE-A1- 2 453 712
- DE-A1- 3 831 087
- FR-A1- 2 461 234
- US-A- 4 256 968

## Description

The present invention relates to a surface measuring machine for hides.

It is known that in the tanning industry and more generally in the hide processing industry it is important to be able to accurately determine the shape and extent of a hide, since its value is also a function of these data. For this reason, machines able to measure the surface of the hides have already been proposed, that is machines in which the hides are introduced one by one, on which suitable equipment determines, as they pass, their shape and their surface extension.

A known type of hide measuring machine comprises a transport and measuring belt, with a plurality of movable belts, on which the hides to be measured are placed and passed under a measuring bar.

This measuring bar is placed transversely above the hide transport belts and is equipped with a plurality of LEDs that generate light rays and direct them to underlying photocells positioned just below the advancement plane of the hides.

As the hide advances, transported by the belts, on which it has been placed, the optical path of the light rays emitted by the LEDs and received by the underlying photocells is interrupted by the hide itself in a manner obviously linked to the shape of the hide and its advancement speed.

A suitable software, which is equipped with a control unit associated with the machine itself, processes the signals generated by the photocells following their darkening by the hide and determines the shape of the hide and the extension of its surface.

Measuring machines of the type just described are widely used and have proved to be valid with hides of a certain thickness and a certain consistency which allows them to be spread easily once placed on the conveyor belt. However, they have not proved to be valid for hides of limited thickness and high yielding, which would require the operator an excessive laying time on the conveyor belt, although some models have been equipped with a suction system underneath the belt itself to make to adhere the hide by the effect of the vacuum to the straps of the belt.

DE3831087 describes a machine for measuring hides which provides a hides widening apparatus, followed by a hides squeezing apparatus, which provides for the passage of the hide in contact with a felt cloth which is pressed on the hide itself by cooperating rollers, and subsequently an apparatus for measuring the size of said hides by optical means. However, this solution is not fully satisfactory as the measuring apparatus is positioned outside, and therefore can get dirty, and in particular dirt can deposit on the surface of the light sources, thus leading to an incorrect measurement of the size of the hides.

US 4,256,968 describes a machine for measuring hides which comprises a transparent roller (made of glass) inside which the means for (optically) measuring the size of the hide are positioned. Said transparent roller is motorized, and allows the hide to be measured to move forward. However, said solution is not fully satisfactory since the dragging by the glass cylinder can cause an elongation of the hide, and therefore lead to an incorrect measurement of its dimensions, and in particular of the longitudinal one.

EP 2 272 302 describes a feed cylinder for flat conveyor belts which provides suitable protrusions on its surface in order to allow a safer engagement of the belt that makes up the conveyor belt.

In order to facilitate the spreading of the hides during the loading phase in the measuring machine, measuring machines have already been proposed and are very widespread, equipped with a bench for introducing and spreading the hides and, downstream of this, with a plurality of idle measures, placed side by side transversely with respect to the direction of advancement of the hides and cooperating with an underlying driving roller, on which they rest. These measuring rollers have the dual function of pulling the hide and at the same time measuring the longitudinal strip of hide that passes under each of these.

In turn, the lower motorized roller has the dual function of pulling the hide and at the same time housing photocells, which cooperate with light emitters, housed in the overlying measuring rollers but fixed when they rotate, to detect the passage of the hide. The measuring rollers are equipped with encoders which, by measuring the rotation speed of the rollers, cooperate with the signals generated by the photocells and thus measure the hide that advances on the machine introduction bench, passing between the idle measuring rollers and the underlying motor roller.

Since, as mentioned, this driving roller has the function of pulling the hides, it is necessary that these are adequately pressed on it and this can only be done by making the overlying idle rollers sufficiently heavy in order to create the necessary friction between the hides. motor roller and the hide to be advanced. And since in the initial phase of insertion of the hide only a part of the same is supported by the introduction bench, while the remaining part remains dangling, the drive of the motor roller also has the purpose of lifting it.

These known measuring machines have proved to be effective in the sense that they have overcome the drawbacks related to the laying of hides and found in carpet measuring machines with fixed measuring bars, but at the same time have highlighted their limitations, in the case of their use to measure thin and elastic hides, such as sheep hides. These in fact, precisely in the phase in which they are measured, undergo an inevitable elongation due to the pulling force due to the motor roller and to the contrasting weight of the part of the hide dangling and not yet supported by the introduction bench; and this elongation does not cease even if the hide should be temporarily stopped on the introduction bench by the operator wishing to stretch it to remove any creases.

The object of the invention is to eliminate this drawback and to propose a surface measuring machine for hides that is capable of measuring practically any type of hide and in particular thin and elastic hides with precision.

Another object of the invention is to provide a surface measuring machine for hides that operates accurately and reliably.

Another object of the invention is to provide a surface measuring machine for hides, whose construction and operating cost does not differ much from the construction and operating cost of traditional surface measuring machines for hides.

All these objects and others that will result from the following description are achieved, according to the invention, with a surface measuring machine for hides as defined in claim 1.

The present invention is further clarified hereinafter in some of its preferred embodiments. reported for purely illustrative and non-limiting purposes with reference to the attached drawings, in which:

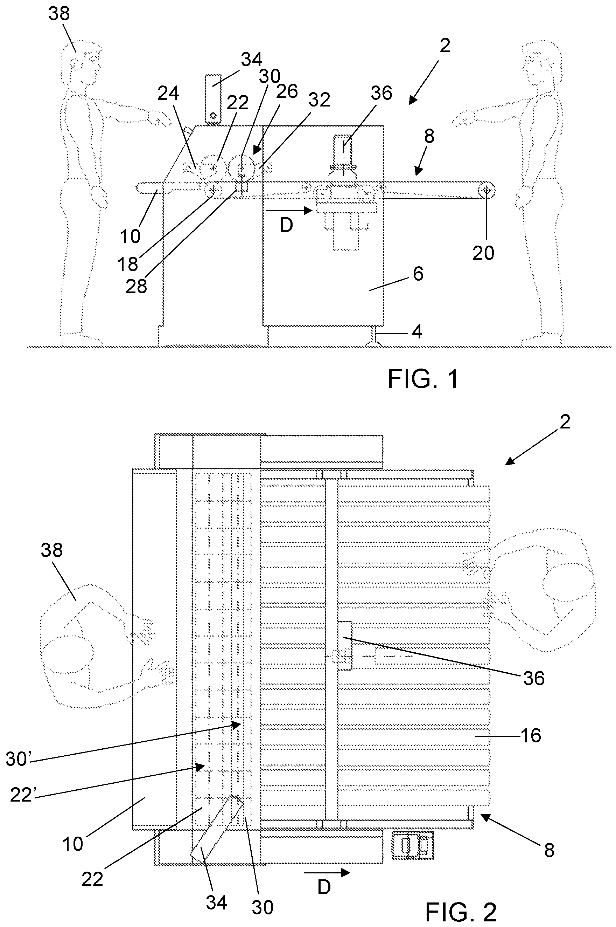

Figure 1 schematically shows a side view of a surface measuring machine for hides according to the invention, and
Figure 2 shows it in plan.

As can be seen from the figures, the hide measuring machine according to the invention, generally indicated with 2, comprises a frame 4 and a paneling 6, applied to it.

The frame 4 supports a conveyor belt 8 of the hides to be measured, previously placed on an introduction bench 10.

In particular, the conveyor belt can move in the direction indicated in the figures with the letter D.

The conveyor belt 8 comprises, in a traditional way, a plurality of transparent belts or tapes 16, side by side and stretched between deflection rollers 18, 20, of which the downstream deflection roller 20 is mechanically connected to a motor (not shown) for its rotation and therefore for the synchronous movement of all the transparent belts 16, while the upstream deflection roller 18 is idle and is fixed to the frame 4.

In an embodiment not shown, the conveyor belt 8 can comprise a single transparent belt 16, which has a transversal dimension suitable for transporting the hides to work.

At the upstream end of the conveyor belt 8 to certain transparent belts 16 or to each transparent belt 16 there is associated at least one overlying roller 22, which is idly mounted, on a common structure 24, articulated to the frame 4 of the machine. In particular, the roller 22 can be positioned at a distance from the beginning of the conveyor belt 8 which is smaller than the longitudinal dimension of the hides that are measured with the machine 2.

In a preferred embodiment, a plurality of rollers 22 can be provided preferably arranged in a row transversal with respect to the direction of advancement of the conveyor belt 8. In particular, therefore, the set of rollers 22 can substantially define a super-roller 22' which extends transversely preferably over the entire conveyor belt 8.

The machine is described below in its version with a plurality of rollers 22 but it should be understood that what has been said also applies if there is only one roller 22.

The characteristics of the rollers 22 and of the structure 24 are defined in so as to ensure that the force with which the rollers 22 press on the underlying transparent belts 16 ensures a correct grip of the interposed hide for its advancement along the conveyor belt 8.

Advantageously, the rollers 22 can be substantially smooth.

Preferably the rollers 22 can be configured to go directly into contact with the hide to be processed.

Downstream of the row of rollers 22 and slightly spaced from them, a measuring assembly is provided, indicated as a whole with 26. Preferably, this measuring assembly 26 is arranged immediately downstream of the rollers 22, that is, without the interposition of further processing stations.

The measuring assembly 26 can be traditional in itself, that is, it can for example comprise at least one optical detector 28, and preferably a plurality of optical detectors 28, arranged so as to substantially define a lower transverse bar of optical detectors 28, in particular photocells, placed just below the conveyor belt 8, and in particular the plane defined by the upper portion of the transparent belts 16. Conveniently, in the embodiment which provides for a plurality of optical detectors 28 these can be aligned in a direction substantially perpendicular to the direction D advancement of the hides. In any case, the optical detectors 28 are positioned so as to cover the entire transverse extension of the conveyor belt 8.

The machine is described below in its version with a plurality of optical detectors 28, but it should be understood that what has been said also applies if only one optical detector 28 is present.

In the position above the optical detectors 28 there is at least one measuring roller 30, and preferably a plurality of substantially coaxial measuring rollers 30, which substantially define a super-roller 30', mounted idle on a structure 32, articulated to the frame 4 of the machine.

The machine is described below in its version with a plurality of measuring rollers 30, but it should be understood that what has been said also applies if there is only one measuring roller 30.

In particular, the measuring rollers 30 are configured to measure speed advancement of the hides.

Furthermore, the measuring rollers 30 can preferably be transparent.

The distance between the dragging station and the measuring station must be defined so that at the maximum forward speed of the hides they have time to return to the initial condition after having been possibly stretched and deformed by the effect of the dragging. Indicatively, an optimal distance can be between 160 and 230 mm, preferably about 200 mm, since shorter distances may not allow a complete elastic return of the hide to its normal condition and greater distances could allow the formation of folds on the hide itself. In particular, in this way the hide is able to relax and that is to resume its original dimensions following any stretching suffered during the passage under the rollers rollers 22, but it does not have the time to form new folds and/or wrinkles that could alter the size measured by the measuring assembly 26.

A part of the elements of the measuring assembly is positioned inside each measuring roller 30, which in itself is traditional and more specifically includes generators of light beams, in particular LEDs, cooperating with the optical detector 28 to provide signals of presence/absence of hide between them.

Inside the measuring rollers 30 there is also housed at least one encoder, and preferably a plurality of encoders, which have the function of detecting the peripheral speed of the respective measuring roller 30, which is also the speed of advancement of the transparent belts 16, since the measuring rollers 30 are driven into rotation thanks to their support on the underlying belts 16 or on the hide, if present.

Furthermore, the measuring rollers 30 may have circumferential grooves in their cylindrical surface intended to come into contact with the hides to be measured, in correspondence with the light beam generators, which keep the surface of the roller slightly spaced from the hide and reduce wear which over time the surface itself would be subject to if it remained in contact with the hide. This significantly reduces the imperfections on the circumferential bands of the surface of the measuring rollers 30 which must be crossed by the light beams, and which due to these imperfections could diffuse and/or reflect the incident light in an anomalous manner and cause errors in the measurement of the hides.

The encoders and the photosensitive elements 28 are connected to a control unit 34, in which resides a software that from the received data is able to calculate the extension of the hide that passes between the transparent belts 16 and the measuring rollers 30 downstream of the measuring rollers 30 can be provided for a conventional stamping station 36, which in itself does not constitute the invention, but which has been illustrated in the drawings, for completeness of representation, since it is typically provided in virtually most of the surface measuring machines for hides.

The operation of the surface measuring machines for hides according to the invention, and in particular according to a preferred embodiment, follows from what has just been described. An operator 38, positioned in front of the insertion bench 10 for the hides to be measured, places a hide on it, trying to lay it out laterally on the bench itself before introducing it with its front edge between the transparent belts 16 and the idle rollers 22 in particular, one end of the hide to be processed is positioned in correspondence with the introduction bench 10 and is made to move forward driven by the belt 8. Conveniently, the rollers 22 help to keep the hide in contact with the conveyor belt 8 and therefore to be towed in the direction D. Since, in order to save space, the rollers 22 are positioned near the beginning of the belt 8, a part of the hide to be processed is substantially left to hang from the carpet itself. This involves a mechanical stress for the hide and an elongation of the same.

After the front edge of the hide has been caught between thelbelts 16 and the rollers 22, the hide is pulled forward on the conveyor belt 8 and can be more or less stretched longitudinally forward and deformed locally and temporarily depending on its characteristics. and in particular according to its greater or lesser elasticity. However, thanks to the distance existing between the rollers 22 and the measuring rollers 30, the hide has time to return elastically to its initial configuration and therefore to present itself in the measuring assembly 26 in a condition that is no longer deformed by the drawing. Furthermore, since unlike traditional machines, the measuring rollers 30 do not have to perform any dragging function, they can be much lighter and in practice do not cause any temporary stretching of the hide should the operator stop it manually to place it correctly on the transport mat.

Thanks to the separation in the machine according to the invention of the dragging station from the measuring station and thanks to their spacing, correctly chosen so as to ensure the substantial elastic return of practically any hide that has been deformed in the dragging station, it is possible to perform the measurement of the hides when they are definitely in a non-deformed condition and therefore with a high measurement accuracy.

Furthermore, the differences between the hide measuring machine according to the invention and a traditional hide measuring machine with measuring rollers are substantially reduced from the constructive point of view to adding a bar of idle rollers upstream of the measuring wheels.

This makes it possible to produce hide measuring machines according to the invention using for the most part the design of corresponding traditional measuring machines.

In particular, unlike DE3831087 and US 4,256,968, the fact of having the measuring system integrated in an idle roller allows to accurately measure the hide to be worked.

## Claims

1. Hide surface measuring machine (2) with an introduction bench (10) for the hides to be measured, comprising:
- a conveyor belt (8), in turn comprising at least one transparent belt (16) configured to support and drag forward said hides,
- at least one idle measuring roller (30), positioned above said conveyor belt (8), with an axis of rotation angled with respect to the direction of advancement of said conveyor belt (8), and configured to come into contact with said hide, in order to measure the feed rate,
- at least one light source housed inside said at least one measuring roller (30), and configured to send a light radiation in the direction of an optical detector (28),
- said at least one optical detector (28) being positioned below said conveyor belt (8)
and configured to detect the light radiation emitted by said at least one light source, **characterized in that**, upstream of said at least one measuring roller (30), at least one idle roller (22) is provided resting on said at least one transparent belt (16) and cooperating with it for the advancement of said hides.

2. Hide surface measuring machine according to claim 1 **characterized in that** said conveyor belt (8) comprises a plurality of transparent belts (16) stretched between an upstream deflection roller (18) and a downstream deflection roller (20), at least one of said upstream deflection roller (18) and downstream deflection roller (20) being mechanically connected to a synchronous movement motor of said plurality of transparent belts (16).

3. Hide surface measuring machine according to claim 2, **characterized in that** said at least one idle roller (22) contrasts with said upstream deflection roller (18) and thereby forms a dragging station located immediately downstream of said introduction bench (10) for the hides.

4. Hide surface measuring machine according to one or more of the preceding claims **characterized in that** said at least one idle roller (22) is configured to go directly into contact with said hide.

5. Hide surface measuring machine according to one or more of the preceding claims **characterized in that** said at least one idle roller (22) is positioned directly upstream with respect to said at least one measuring roller (30).

6. Hide surface measuring machine according to one or more of the preceding claims **characterized in that** said at least one measuring roller (30) is connected to at least one encoder for measuring its peripheral speed.

7. Hide surface measuring machine according to one or more of the preceding claims **characterized in that** said at least one idle roller (22) has a substantially smooth surface.

8. Hide surface measuring machine according to one or more of the preceding claims **characterized in that** it comprises a plurality of idle rollers (22), substantially coaxial, which substantially define a super-roller (22').

9. Hide surface measuring machine machine according to one or more of the preceding claims, **characterized in that** said at least one idle roller (22) is mounted on a common structure (24) articulated to a frame (4) of the machine (2).

10. Hide surface measuring machine according to one or more of the preceding claims **characterized in that** said at least one measuring roller (30) has an external surface, and in particular the portions of the external surface intended to come into contact with the hide to be processed, which are substantially smooth.

11. Hide surface measuring machine according to one or more of the preceding claims, **characterized in that** said at least one measuring roller (30) has grooves on the outer surface, in correspondence with said at least one light source, so that in correspondence with said grooves the outer surface of the measuring roller (30) remains separate from the hide to be processed.

12. Hide surface measuring machine according to one or more of the preceding claims **characterized in that** it comprises a plurality of substantially coaxial measuring rollers (30) which substantially define a super roller (30').

13. Hide surface measuring machine machine according to one or more of the preceding claims **characterized in that** said at least one measuring roller (30) is idle mounted on a structure (32) articulated to a frame (4) of the machine (2).

14. Hide surface measuring machine according to one or more of the preceding claims, **characterized in that** the distance between said idle rollers (22) and said measuring rollers (30) is such as to allow said hides to relax any mechanical tensions generated by the passage between said uptsream deflection roller (18) and said at least one idle roller (22) and is comprised between 160 and 230 mm.

15. Hide surface measuring machine according to one or more of the preceding claims, **characterized in that** the distance between said at least one idle roller (22) and said at least one measuring (30) is approximately 200 mm.

## Patentansprüche

1. Hautoberflächenmessmaschine (2) mit einem Einführtisch (10) für die zu vermessenden Häute, umfassend:
- ein Förderband (8), das seinerseits mindestens ein transparentes Band (16) umfasst, das so konfiguriert ist, dass es die Häute trägt und vorwärts zieht,
- mindestens eine Leerlaufmessrolle (30), die oberhalb des Förderbandes (8) positioniert ist, deren Drehachse in Bezug auf die Vorschubrichtung des Förderbandes (8) abgewinkelt ist, und die so konfiguriert ist, dass sie mit der Haut in Kontakt kommt, um die Zuführungsgeschwindigkeit zu messen,
- mindestens eine Lichtquelle, die im Inneren der mindestens einen Messrolle (30) untergebracht und so konfiguriert ist, dass sie eine Lichtstrahlung in Richtung eines optischen Detektors (28) sendet,
- wobei der mindestens eine optische Detektor (28) unterhalb des Förderbandes (8) positioniert und so konfiguriert ist, dass er die von der mindestens einen Lichtquelle emittierte Lichtstrahlung detektiert, **dadurch gekennzeichnet, dass** stromaufwärts der mindestens einen Messrolle (30) mindestens eine Leerlaufrolle (22) vorgesehen ist, die auf dem mindestens einen transparenten Band (16) aufliegt und mit diesem für den Vorschub der Häute zusammenwirkt.

2. Hautoberflächenmessmaschine nach Anspruch 1, **dadurch gekennzeichnet, dass** das Förderband (8) eine Vielzahl von transparenten Bändern (16) umfasst, die zwischen einer stromaufwärtigen Umlenkrolle (18) und einer stromabwärtigen Umlenkrolle (20) gespannt sind, wobei mindestens eine der stromaufwärtigen Umlenkrolle (18) und der stromabwärtigen Umlenkrolle (20) mechanisch mit einem Synchronbewegungsmotor der Vielzahl von transparenten Bändern (16) verbunden ist.

3. Hautoberflächenmessmaschine nach Anspruch 2, **dadurch gekennzeichnet, dass** die mindestens eine Leerlaufrolle (22) der stromaufwärtigen Umlenkrolle (18) gegenübersteht und dadurch eine Schleppstation bildet, die unmittelbar stromabwärts des Einführtisches (10) für die Häute angeordnet ist.

4. Hautoberflächenmessmaschine nach einem oder mehreren der vorhergehenden Ansprüche, **dadurch gekennzeichnet, dass** die mindestens eine Leerlaufrolle (22) so konfiguriert ist, dass sie direkt mit der Haut in Kontakt kommt.

5. Hautoberflächenmessmaschine nach einem oder mehreren der vorhergehenden Ansprüche, **dadurch gekennzeichnet, dass** die mindestens eine Leerlaufrolle (22) in Bezug auf die mindestens eine Messrolle (30) unmittelbar stromaufwärts positioniert ist.

6. Hautoberflächenmessmaschine nach einem oder mehreren der vorhergehenden Ansprüche, **dadurch gekennzeichnet, dass** die mindestens eine Messrolle (30) mit mindestens einem Encoder zur Messung ihrer Umfangsgeschwindigkeit verbunden ist.

7. Hautoberflächenmessmaschine nach einem oder mehreren der vorhergehenden Ansprüche, **dadurch gekennzeichnet, dass** die mindestens eine Leerlaufrolle (22) eine im Wesentlichen glatte Oberfläche aufweist.

8. Hautoberflächenmessmaschine nach einem oder mehreren der vorhergehenden Ansprüche, **dadurch gekennzeichnet, dass** sie eine Vielzahl von im Wesentlichen koaxialen Leerlaufrollen (22) umfasst, die im Wesentlichen eine Superrolle (22') definieren.

9. Hautoberflächenmessmaschine nach einem oder mehreren der vorhergehenden Ansprüche, **dadurch gekennzeichnet, dass** die mindestens eine Leerlaufrolle (22) an einer gemeinsamen Struktur (24) montiert ist, die an einem Rahmen (4) der Maschine (2) angelenkt ist.

10. Hautoberflächenmessmaschine nach einem oder mehreren der vorhergehenden Ansprüche, **dadurch gekennzeichnet, dass** die mindestens eine Messrolle (30) eine Außenfläche und insbesondere die Abschnitte der Außenfläche, die mit der zu bearbeitenden Haut in Kontakt kommen sollen, im Wesentlichen glatt sind.

11. Hautoberflächenmessmaschine nach einem oder mehreren der vorhergehenden Ansprüche, **dadurch gekennzeichnet, dass** die mindestens eine Messrolle (30) Rillen auf der Außenfläche in Übereinstimmung mit der mindestens einen Lichtquelle aufweist, so dass in Übereinstimmung mit den Rillen die Außenfläche der Messrolle (30) von der zu bearbeitenden Haut getrennt bleibt.

12. Hautoberflächenmessmaschine nach einem oder mehreren der vorhergehenden Ansprüche, **dadurch gekennzeichnet, dass** sie eine Vielzahl von im Wesentlichen koaxialen Messrollen (30) umfasst, die im Wesentlichen eine Superrolle (30') definieren.

13. Hautoberflächenmessmaschine nach einem oder mehreren der vorhergehenden Ansprüche, **dadurch gekennzeichnet, dass** die mindestens eine Messrolle (30) an einer Struktur (32), die an einem Rahmen (4) der Maschine (2) angelenkt ist, frei beweglich montiert ist.

14. Hautoberflächenmessmaschine nach einem oder mehreren der vorhergehenden Ansprüche, **dadurch gekennzeichnet, dass** der Abstand zwischen den Leerlaufrollen (22) und den Messrollen (30) derart ist, dass die Haut mechanische Spannungen, die durch den Durchgang zwischen der stromaufwärtigen Umlenkrolle (18) und der mindestens einen Leerlaufrolle (22) erzeugt werden, abbauen kann, und zwischen 160 und 230 mm beträgt.

15. Hautoberflächenmessmaschine nach einem oder mehreren der vorhergehenden Ansprüche, **dadurch gekennzeichnet, dass** der Abstand zwischen der mindestens einen Leerlaufrolle (22) und der mindestens einen Messrolle (30) etwa 200 mm beträgt.

## Revendications

1. Machine de mesure (2) de la surface de peaux équipée d'un banc d'introduction (10) pour les peaux à mesurer, comprenant :
- une bande transporteuse (8), comprenant à son tour au moins une bande transparente (16) configurée pour supporter et entraîner vers l'avant lesdites peaux,
- au moins un rouleau de mesure libre (30), positionné au-dessus de ladite bande transporteuse (8), avec un axe de rotation incliné par rapport à la direction d'avancement de ladite bande transporteuse (8), et configuré pour entrer en contact avec ladite peau, afin de mesurer le débit d'alimentation,
- au moins une source lumineuse logée à l'intérieur dudit au moins un rouleau de mesure (30), et configurée pour envoyer un rayonnement lumineux en direction d'un détecteur optique (28),
- ledit au moins un détecteur optique (28) étant positionné sous ladite bande transporteuse (8) et configuré pour détecter le rayonnement lumineux émis par ladite au moins une source lumineuse, **caractérisée en ce que**, en amont dudit au moins un rouleau de mesure (30), au moins un rouleau libre (22) est prévu en appui sur ladite au moins une bande transparente (16) et coopérant avec elle pour l'avancement desdites peaux.

2. Machine de mesure de la surface de peaux selon la revendication 1, **caractérisée en ce que** ladite bande transporteuse (8) comprend une pluralité de bandes transparentes (16) tendues entre un rouleau de renvoi amont (18) et un rouleau de renvoi aval (20), au moins un desdits rouleaux de renvoi amont (18) et aval (20) étant relié mécaniquement à un moteur de déplacement synchrone de ladite pluralité de bandes transparentes (16).

3. Machine de mesure de la surface de peaux selon la revendication 2, **caractérisée en ce que** ledit au moins un rouleau libre (22) contraste avec ledit rouleau de renvoi amont (18) et forme ainsi un poste d'entraînement situé immédiatement en aval dudit banc d'introduction (10) des peaux.

4. Machine de mesure de la surface de peaux selon l'une ou plusieurs des revendications précédentes, **caractérisée en ce que** ledit au moins un rouleau libre (22) est configuré pour entrer directement en contact avec ladite peau.

5. Machine de mesure de la surface de peaux selon l'une ou plusieurs des revendications précédentes, **caractérisée en ce que** ledit au moins un rouleau libre (22) est positionné directement en amont par rapport audit au moins un rouleau de mesure (30).

6. Machine de mesure de la surface de peaux selon l'une ou plusieurs des revendications précédentes, **caractérisée en ce que** ledit au moins un rouleau de mesure (30) est relié à au moins un encodeur pour mesurer sa vitesse périphérique.

7. Machine de mesure de la surface de peaux selon l'une ou plusieurs des revendications précédentes, **caractérisée en ce que** ledit au moins un rouleau libre (22) présente une surface sensiblement lisse.

8. Machine de mesure de la surface de peaux selon l'une ou plusieurs des revendications précédentes, **caractérisée en ce qu'**elle comprend une pluralité de rouleaux libres (22), sensiblement coaxiaux, qui définissent sensiblement un calandreur (22').

9. Machine de mesure de la surface de peaux selon l'une ou plusieurs des revendications précédentes, **caractérisée en ce que** ledit au moins un rouleau libre (22) est monté sur une structure commune (24) articulée à un châssis (4) de la machine (2).

10. Machine de mesure de la surface de peaux selon l'une ou plusieurs des revendications précédentes, **caractérisée en ce que** ledit au moins un rouleau de mesure (30) présente une surface externe, et en particulier les parties de la surface externe destinées à entrer en contact avec la peau à traiter, qui sont sensiblement lisses.

11. Machine de mesure de la surface de peaux selon l'une ou plusieurs des revendications précédentes, **caractérisée en ce que** ledit au moins un rouleau de mesure (30) comporte des rainures sur la surface extérieure, en correspondance avec ladite au moins une source lumineuse, de sorte qu'en correspondance avec lesdites rainures, la surface extérieure du rouleau de mesure (30) reste séparée de la peau à traiter.

12. Machine de mesure de la surface de peaux selon l'une ou plusieurs des revendications précédentes, **caractérisée en ce qu'**elle comprend une pluralité de rouleaux de mesure (30) sensiblement coaxiaux qui définissent sensiblement un calandreur (30').

13. Machine de mesure de la surface de peaux selon l'une ou plusieurs des revendications précédentes, **caractérisée en ce que** ledit au moins un rouleau de mesure (30) est monté libre sur une structure (32) articulée à un châssis (4) de la machine (2).

14. Machine de mesure de la surface de peaux selon l'une ou plusieurs des revendications précédentes, **caractérisée en ce que** la distance entre lesdits rouleaux libres (22) et lesdits rouleaux de mesure (30) est telle qu'elle permet à ladite peau de relâcher les tensions mécaniques générées par le passage entre ledit rouleau de renvoi amont (18) et ledit au moins un rouleau libre (22) et qu'elle est comprise entre 160 et 230 mm.

15. Machine de mesure de la surface de peaux selon l'une ou plusieurs des revendications précédentes, **caractérisée en ce que** la distance entre ledit au moins un rouleau libre (22) et ledit au moins un rouleau de mesure (30) est d'environ 200 mm.
